# FASCICULE DE BREVET EUROPEEN

(11) **EP 2 239 830 B1**
(45) Date de publication et mention de la délivrance du brevet: **25.09.2013**
(21) Numéro de dépôt: 10003567.4
(22) Date de dépôt: 31.03.2010
(51) Int. Cl.: H02K 7/02, H02K 17/16

(54) **Moteur électrique à induction à courant alternatif**
Wechselstrominduktionsmotor
AC induction motor

(30) Priorité: 06.04.2009 BE 200900214
(43) Date de publication de la demande: 13.10.2010
(73) Titulaire: KS Research, société anonyme, 4630 Soumagne (BE)
(72) Inventeur: Kupisiewicz, Stefan, 4630 Soumagne (BE); Schoebrechts, Jacques Jean, 4630 Soumagne (BE)
(74) Mandataire: Donné, Eddy

(56) Documents cités:
- EP-A- 1 533 884
- FR-A- 2 041 496
- GB-A- 293 144
- US-A- 5 977 679

## Description

L'invention concerne un moteur électrique à induction à courant alternatif qui est notamment applicable à un moteur à induction en anneau gramme, plus spécialement un moteur alimenté par un variateur à fréquence variable.

Du brevet Européen 1.533.884 on connaît déjà un tel moteur qui est incorporé dans un accumulateur d'énergie cinétique. Celui-ci comprend un anneau Gramme, qui constitue le stator fixe d'un moteur asynchrone. Ce moteur a pour fonction d'entraîner le tambour externe au moteur à une vitesse définie.

Dans cette application ce moteur est avantageusement alimenté par un variateur à fréquence variable.

L'utilisation de convertisseurs à commutations rapides a cependant pour effet de générer par décharges, courants capacitives et par couplages inductifs des courants qui peuvent être dommageables pour les roulements de ces machines.

Certaines précautions élémentaires doivent être prises.

Elles consistent, d'une part, à réaliser un chemin aussi peu impédant que possible pour le retour des courants HF en mode commun vers le variateur, ce qui sera réalisé au moyen de câbles adaptés (faradisés, terres symétriques, ...) entre la sortie du variateur et le moteur qu'il alimente et, d'autre part à réaliser un réseau d'équipotentialité de terre parfaitement adapté aux hautes fréquences (HF), avec liaisons par tresses, connexions adaptées, etc.

Par ailleurs, ces précautions peuvent être complétées par d'autres dispositifs connus tels que filtres en sortie du variateur (filtres mode commun, filtres sinus, filtres dV/dt) ; utilisation de roulements ou paliers isolés ; balais ou brosses de mise à la terre ; écran électrostatique dans l'entrefer du moteur, et ainsi de suite.

Ces différents dispositifs complémentaires ont leurs avantages et leurs inconvénients.

Un autre moteur selon l'état de la technique est connu du document US-A-5, 977, 679.

La présente invention a pour but de remédier efficacement aux courants Basse Fréquence (BF) et Haute Fréquence (HF) résultant de couplages à haute et basse fréquence inductif et de réduire de manière drastique les inconvénients de l'utilisation de variateurs électroniques.

Ce but est atteint selon l'invention par un moteur électrique à induction à courant alternatif polyphasé selon les revendications 1 et 7.

L'avantage d'un moteur selon l'invention est que le bobinage toroïdal auxiliaire s'oppose à la génération des courants pouvant endommager les roulements du moteur et permet donc de prolonger la durée de vie de ces roulements et de prolonger l'interval des entretiens périodiques.

L'invention peut être appliquée sur un moteur asynchrone conventionnel, mais s'applique aussi sur des moteurs asynchrones dont le stator est formé par un anneau Gramme alimenté par un variateur de fréquence.

Selon un aspect spécifique, l'invention s'applique sur un moteur d'un accumulateur d'énergie dont le stator est un anneau Gramme alimenté par un variateur de fréquence.

Le bobinage toroïdal fermé sur lui-même peut être réalise soit comme un bobinage auxiliaire qui s'ajoute au bobinage principal actif qui est alimenté par le variateur de fréquence ou, alternativement, comme un bobinage unique qui constitue à la fois le bobinage principal alimenté par le variateur de fréquence et le bobinage toroïdal auxiliaire, ce qui est évidemment moins couteux, le bobinage principal et auxiliaire devenue communs présentant une réactance de fuite statorique faible et au moins égale à 0,5 fois la réactance de fuite d'un moteur conventionnel.

Pour plus de clarté, quelques exemples de réalisation d'un moteur électrique à induction selon l'invention sont décrits ci-après à titre illustratif et non restrictif, référence étant faite aux dessins annexés dans lesquels:
La figure 1 est une coupe schématique d'un système d'alimentation sans interruption selon l'EP 1.533.884, équipé d'un moteur asynchrone selon l'état de la technique ;
la figure 2 représente une coupe selon la ligne II-II dans la figure 1 ;
la figure 3 représente une coupe semblable à celle de

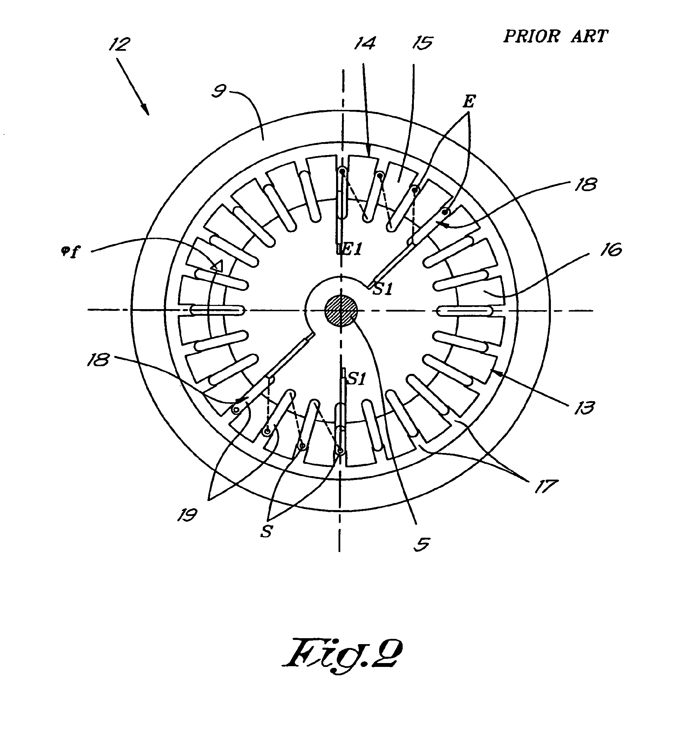

la figure 2, mais pour un moteur selon l'invention;

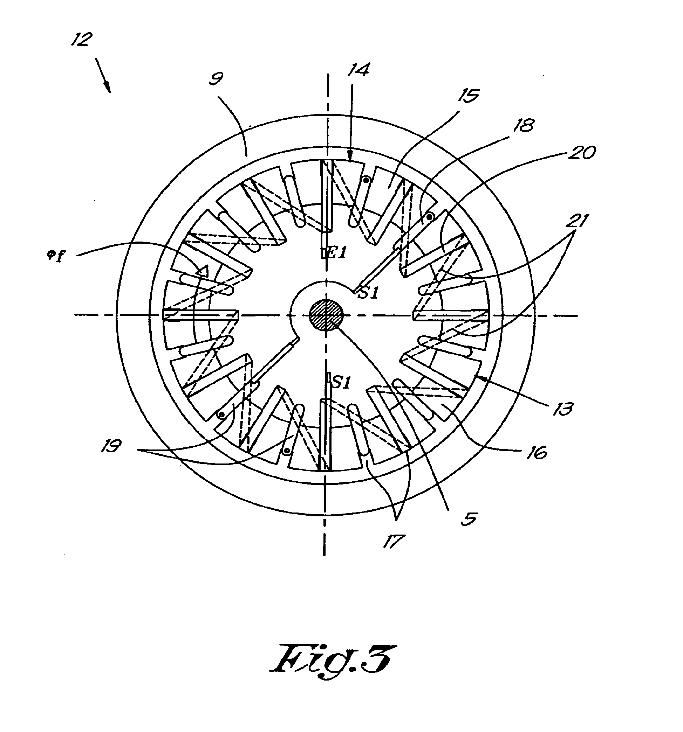

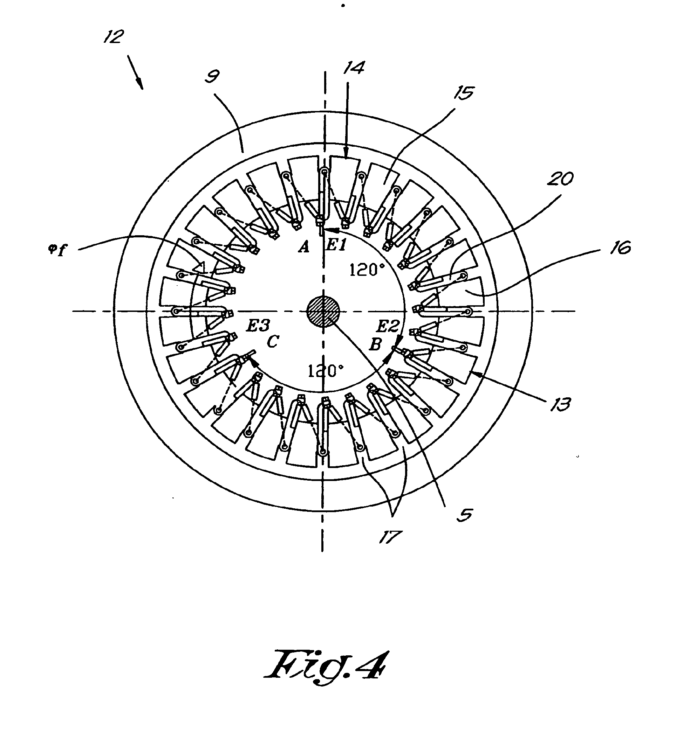

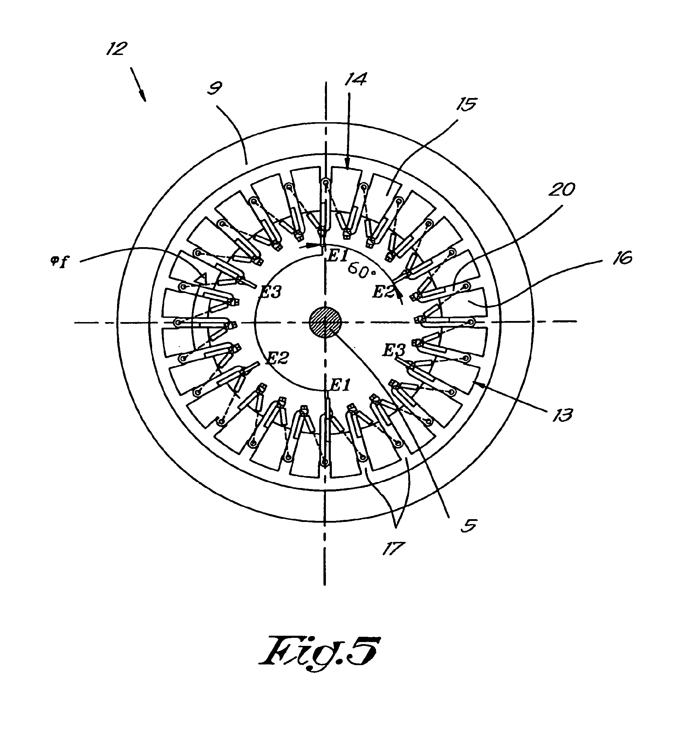

les figures 4 et 5 représentes des coupes semblables à celle de la figure 3, mais pour d'autres réalisations selon l'invention ;

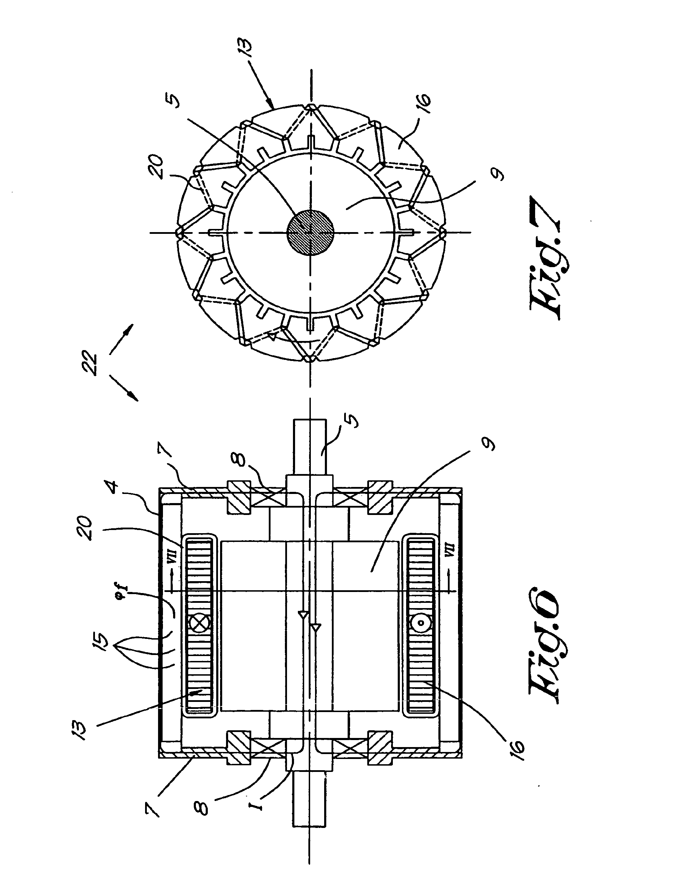

la figure 6 représente une coupe schématique d'un moteur asynchrone conventionnel selon l'invention ;
la figure 7 représente une coupe selon la ligne VII-VII dans la figure 6.

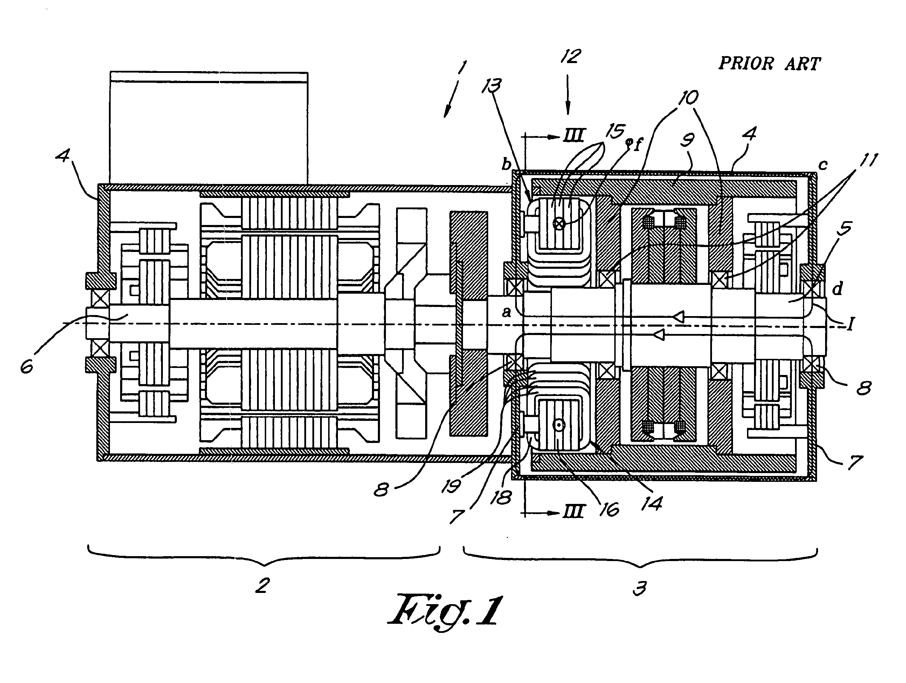

La figure 1 concerne un système d'alimentation électrique sans interruption (ASI) 1 comme décrit dan le brevet EP 1.533.884.

L'ASI 1 est constitué principalement d'une machine synchrone 2 et d'un accumulateur d'énergie cinétique 3 selon l'invention, qui sont montés dans une carcasse.

L'accumulateur d'énergie cinétique 3 comprend un arbre 5 rigidement lié à l'arbre 6 de la machine synchrone 2 et porté par les paliers 7 et par les roulements 8.

L'accumulateur 3 comprend également un tambour 9 en acier qui est porté par des paliers 10 et des roulements 11 et qui peut être entraîné en rotation relative par rapport à l'arbre 5 de l'accumulateur d'énergie cinétique 3 et qui constitue le rotor d'un moteur dont le stator 13 est formé par un anneau Gramme, bien connu par l'homme de métier, qui est fixé sur le palier central 7 de la carcasse 4, entourant l'arbre 5 susdit et étant entouré à l'extérieure par l'extrémité du tambour 9 du rotor.

Cet anneau Gramme 14 est alimenté par un variateur de fréquence non représenté. Il est représenté plus en détail dans la figure 2, et constitué d'un ensemble de tôles magnétiques 15 empilées formant un noyau 16 feuilleté circulaire, qui est muni d'encoches longitudinales 17, dans lesquelles des bobines 18 sont enroulées autour du noyau 16.

La nature particulière de l'anneau Gramme 14 permet l'utilisation de deux types de configurations de bobinages.

Un premier type est représenté dans la figure 2 dans une version de bobinage principal classique à deux pôles et vingt-quatre encoches 17. Seule les connexions d'une phase sont représentées pour une raison de clarification.

Si on considère la phase 1, ces connexions sont relativement conventionnelles et comprennent pour une même phase des conducteurs « entrants » et des conducteurs « sortants », représenté dans la figure 2 par les flèches E et S perpendiculaire à la surface du dessin.

Une phase est alors constituée dans cet exemple de deux bobines 18 de quatre sections 19, ces deux demi-bobines 18 correspondent aux conducteurs « aller » et « retour » d'un bobinage « Siemens ».

Dans cette version classique, le bobinage triphasé peut être couplé en étoile ou en triangle.

Les forces magnétomotrices des différentes phases sont classiques et les théories des moteurs conventionnels peuvent être appliquées sans modifications profondes.

Considérons un flux non actif tel que ϕf circulant dans l'anneau Gramme 14, celui-ci peut résulter :
- soit d'une discontinuité inhérente à toute machine électrique ou à un décentrement du stator 13 par rapport au rotor 9, les courants de palier 8 résultant de ce type de dissymétrie étant bien connus, la fréquence des courants étant égale à celle de la fréquence des courants d'alimentation des enroulements triphasés du stator et pouvant générer des tensions dommageables que dans les machines de grandes dimensions ;
- soit d'un couplage inductif résultant de courants à HF en mode commun dus aux courants capacitifs liées aux variations dV/dt des variateurs.

En raison des inductances élevées des bobinages, les courants HF sont canalisés et confinés aux entrées des bobinages ce qui modifie la symétrie des courants, la somme des ampères-tours n'est plus nulle et provoque la circulation de flux HF relativement importants.

Ce flux, en circulant dans l'anneau 14, ne produira aucune force électromotrice dans les phases, chaque phase est en effet constituée de deux demi-bobines 18 de sens opposés et le fait de connecter le bobinage triphasé en étoile ou en triangle ne modifiera pas cet état de choses.

L'arbre 5, les roulements 8, la carcasse 4 et ses paliers 7 forment en quelque sorte une boucle fermée abcd conductrice de courant qui est traversée le flux ϕf comme représenté dans la figure 1. Cette boucle abcd sera le siège d'une force électromotrice relativement élevée en raison des hautes fréquences de ces flux.

La force électromotrice qui en résulte se répartira essentiellement sur les roulements 8 et un courant représenté dans la figure 1 par les flèches I peut en résulter.

En effet, si cette force électromotrice est supérieure à la tension de claquage du film d'huile (tension d'autant plus faible que la graisse est contaminée ou usagée, que la température est élevée, ainsi que pour de faibles vitesses), un phénomène de piqûration ou de cannelures peut apparaître et réduire de manière importante la durée de vie des roulements 8.

Selon l'invention, on ajoute un bobinage auxiliaire 20 tel que celui représenté en figure 3, bobinage 20 complètement fermé sur lui-même et formant un bobinage toroïdal fermé avec des spires 21 connectées en quelque sorte en série.

La présence du bobinage 20 selon l'invention va générer une force magnétomotrice s'opposant vigoureusement au flux ϕf dont la valeur résiduelle sera insuffisante pour créer une force électromotrice dommageable aux bornes des roulements 8.

Tous les flux tels que ϕf provoqueront la naissance de force électromotrices dans chaque spire 21.

Ces spires 21 mises en série vont générer un courant dans ce bobinage fermé 20. Ces courants s'opposeront à ces variations de flux et le flux résiduel sera d'autant plus faible que l'impédance du bobinage 20 sera faible.

On se trouve dans la situation d'un transformateur toroïdal dont le secondaire est en court-circuit (l'inductance de ce type de bobinage est toujours très faible).

La figure 3 représente un bobinage fermé 20 constitué d'un méplat qui doit bien entendu être isolé et ne peut éventuellement comporter qu'un point de connexion à la masse.

Il est bien entendu que ce bobinage fermé peut être agencé de différentes manières, un ou plusieurs fils dans chaque encoche, fils ou méplats toutes les 1, 2, 3 ou 4 encoche, disposition proche du circuit magnétique, ...

Un deuxième type de configuration de bobinage selon l'invention d'un accumulateur d'énergie cinétique 3 pourvu d'un moteur 12 avec stator 13 en anneau Gramme 14, est un bobinage 20 dans lequel l'ensemble du bobinage est un bobinage 20 toroïdal unique et fermé sur lui-même tel que représenté figure 4, analogue à la manière des bobinages en anneau gramme pour machines à courants continus du 19^{ème} siècle, seulement dans ce cas pour des courants alternatifs.

En ce cas, on peut réaliser un bobinage 20 triphasé bipolaire en connectant les phases aux point A,B,C espacés de 120° comme indiqué sur la figure 4.

Les forces magnétomotrices sont différentes de celles d'un bobinage « Siemens » comme décrit en relation à la figure 2.

On pourrait de la même façon réaliser un bobinage 20 N-phasé en espaçant les entrées de 2.n/N.

Un bobinage 20 à quatre pôles sera réalisé en connectant les entrées selon la figure 5.

Les phases E1, E1, E3 sont espacée spatialement de 60° et 120° électriques, les entrées E1, E2, E3 sont connectées en parallèle, et sont alimentées par les bornes triphasées de sortie du variateur.

Suivant un même principe, on peut réaliser un bobinage 20 triphasé de six pôles, huit pôles.

Le point commun de ces différents bobinages 20 est que, quel que soit le nombres de pôles ou de phases, ils ne diffèrent que par le nombre et le type de connexions, le bobinage 20 selon l'invention fermé sur lui-même, a pour propriété fondamentale que le nombre d'ampères-tours sur le pourtour sera à tout instant égal à 0, et que par conséquent des flux résultants de dissymétries telles que celles décrites pour le premier type de bobinage, seront réduits à une valeur négligeable.

Selon un autre aspect de l'invention, le principe de bobinage 20 selon l'invention, peut par extension être appliqué à un moteur asynchrone conventionnel 22 avec bobinages du type « SIEMENS » telle que représenté schématiquement dans les figures 6 et 7 qui représente un moteur asynchrone deux pôles dont le bobinage conventionnel n'a pas été représenté.

Si un flux tel que ϕf décrit précédemment venait à être généré, un bobinage 20 selon l'invention et représenté en figure 7 pour former un bobinage 20 toroïdal fermé sur lui-même aurait pour effet de bloquer ce flux et empêcher la circulation de courants I au travers de l'arbre 5 et des roulements 8.

Comme précédemment, ce bobinage fermé 20 peut être agencé de différentes manières, un ou plusieurs fils dans chaque encoche, fils ou méplats toutes les 1, 2, 3,... encoches, proches du circuit magnétique.

Le bobinage 20 selon l'invention sera plus efficace si le paquet de tôles magnétiques 15 est placé dans une carcasse 24 en fonte d'aluminium ou en laissant un espace suffisant entre l'extérieur des tôles et la virole extérieure.

Il est évident que l'invention n'est nullement limitée aux exemples décrits ci-avant mais que de nombreuses modifications peuvent être apportées au moteur électrique à induction décrits ci-avant sans sortir du cadre de l'invention telle que définie dans les revendications suivantes.

## Revendications

1. Moteur électrique à induction à courant alternatif, en particulier un moteur (12-22) alimenté par un variateur de fréquence, comprenant une carcasse (4) qui supporte un rotor (9) au moyens de roulements (8) et qui supporte un stator (13) avec un noyau annulaire (16) coaxial en matière magnétique supportant un bobinage actif alimenté par le variateur de fréquence, **caractérisé en ce que** le stator (13) est pourvu d'un bobinage (20) auxiliaire toroïdal fermé sur lui-même et enveloppant le noyau annulaire (16).

2. Moteur électrique selon la revendication 1, **caractérisé en ce que** le moteur (12-22) est un moteur asynchrone.

3. Moteur électrique selon la revendication 1 ou 2, **caractérisé en ce que** le moteur (12-22) est un moteur asynchrone classique (22).

4. Moteur électrique selon la revendication 3, **caractérisé en ce que** le noyau en matière magnétique est placé dans une carcasse en fonte d'aluminium (4).

5. Moteur électrique selon l'une quelconque des revendications 1 à 3, **caractérisé en ce que** le moteur (12-22) est un moteur asynchrone dont le stator (13) est formé par un anneau Gramme (14) alimenté par un variateur de fréquence.

6. Moteur électrique selon l'une quelconque des revendications précédentes, **caractérisé en ce que** le moteur (12-22) est un moteur électrique d'un accumulateur d'énergie cinétique.

7. -Moteur électrique à induction à courant alternatif, en particulier un moteur (12-22) alimenté par un variateur de fréquence, comprenant une carcasse (4) qui supporte un rotor (9) au moyen de roulements (8) et qui supporte un stator (13) avec un noyau annulaire (16) coaxial en matière magnétique supportant un bobinage actif alimenté par le variateur de fréquence, **caractérisé en ce que** le stator (13) est pourvu d'un bobinage (20) toroïdal fermé sur lui-même et enveloppant le noyau annulaire (16) et qui constitue à la fois le bobinage principal (18) alimenté par le variateur de fréquence et un bobinage s'opposant à la génération des courants capacitifs et par couplage inductif pouvant endommager les susdits roulements (8) et présentant une réactance de fuite statorique faible et au moins égale à 0,5 fois la réactance de fuite d'un moteur conventionnel.

8. Moteur électrique selon la revendication 7, **caractérisé en ce que** le bobinage toroïdal (20) unique est réalisé comme un bobinage N-phasé avec des entrées espacées de 360°/N.

9. Moteur électrique selon la revendication 8, **caractérisé en ce que** le bobinage (20) est réalisé comme un bobinage triphasé avec des entrées connectées en parallèle, lesquelles sont alimentées par les bornes triphasées de sortie du variateur.

## Patentansprüche

1. Wechselstrominduktionsmotor, insbesondere ein Motor (12-22) mit Versorgung über einen Frequenzumrichter, umfassend ein Gehäuse (4), das mittels Kugellagern (8) einen Rotor (9) trägt und das einen Stator (13) trägt mit einem ringförmigen Kern (16), der koaxial ist und aus magnetischem Material besteht, der eine aktive Wicklung trägt, die über den Frequenzumrichter versorgt wird, **dadurch gekennzeichnet, dass** der Stator (13) mit einer Toroid-Nebenwicklung (20) versehen ist, die in sich geschlossen ist und den ringförmigen Kern (16) umschließt.

2. Elektromotor nach Anspruch 1, **dadurch gekennzeichnet, dass** der Motor (12-22) ein asynchroner Motor ist.

3. Elektromotor nach Anspruch 1 oder 2, **dadurch gekennzeichnet, dass** der Motor (12-22) ein asynchroner klassischer Motor (22) ist.

4. Elektromotor nach Anspruch 3, **dadurch gekennzeichnet, dass** der Kern aus magnetischem Material in einem Gehäuse aus Aluminiumguss (4) untergebracht ist.

5. Elektromotor nach irgendeinem der Ansprüche 1 bis 3, **dadurch gekennzeichnet, dass** der Motor (12-22) ein asynchroner Motor ist, dessen Stator (13) aus einem Grammeschen Ring (14) gebildet ist, der über einen Frequenzumrichter versorgt wird.

6. Elektromotor nach irgendeinem der vorhergehenden Ansprüche, **dadurch gekennzeichnet, dass** der Motor (12-22) ein Elektromotor mit einem Akkumulator für kinetische Energie ist.

7. Wechselstrominduktionsmotor, insbesondere ein Motor (12-22) mit Versorgung über einen Frequenzumrichter, umfassend ein Gehäuse (4), das mittels Kugellagern (8) einen Rotor (9) trägt und das einen Stator (13) trägt, mit einem ringförmigen Kern (16), der koaxial ist und aus magnetischem Material besteht, der eine aktive Wicklung trägt, die über den Frequenzumrichter versorgt wird, **dadurch gekennzeichnet, dass** der Stator (13) mit einer Toroid-Wicklung (20) versehen ist, die in sich geschlossen ist und den ringförmigen Kern (16) umschließt und die gleichzeitig die Hauptwicklung (18) mit Versorgung über den Frequenzumrichter sowie eine Wicklung darstellt, die sich der Generierung des kapazitiven Stroms entgegenstellt und die durch induktive Kopplung die genannten Kugellager (8) beschädigen kann und die eine schwache Leck-Reaktanz des Stators von mindestens 0,5 der Leck-Reaktanz eines herkömmlichen Motors aufweist.

8. Elektromotor nach Anspruch 7, **dadurch gekennzeichnet, dass** die einheitliche Toroid-Wicklung (20) als N-phasige Wicklung ausgeführt ist, mit Eingängen, deren Abstände 360°/N betragen.

9. Elektromotor nach Anspruch 8, **dadurch gekennzeichnet, dass** die Wicklung (20) als Drei-Phasen-Wicklung ausgeführt ist, mit in Reihe geschalteten Eingängen, die über die Drei-Phasen-Ausgangsklemmen des Umrichters versorgt werden.

## Claims

1. Alternating current electric induction motor, in particular a motor (12-22) supplied by a variable frequency drive, comprising a frame (4) that supports a rotor (9) by means of bearings (8) and which supports a stator (13) with a coaxial annular core (16) of magnetic material supporting an active coil supplied by the variable frequency drive, **characterised in that** the stator (13) is provided with a toroidal auxiliary coil (20) closed on itself and surrounding the annular core (16).

2. Electric motor according to claim 1, **characterised in that** the motor (12-22) is an asynchronous motor.

3. Electric motor according to claim 1 or 2, **characterised in that** the motor (12-22) is a conventional asynchronous motor (22).

4. Electric motor according to claim 3, **characterised in that** the core of magnetic material is placed in a frame of cast aluminium (4).

5. Electric motor according to any one of the claims 1 to 3, **characterised in that** the motor (12-22) is an asynchronous motor whose stator (13) is formed by a Gramme ring (14) supplied by a variable frequency drive.

6. Electric motor according to any one of the previous claims, **characterised in that** the motor (12-22) is an electric motor of a kinetic energy accumulator.

7. Alternating current electric induction motor, in particular a motor (12-22) supplied by a variable frequency drive, comprising a frame (4) that supports a rotor (9) by means of bearings (8) and which supports a stator (13) with a coaxial annular core (16) of magnetic material supporting an active coil supplied by the variable frequency drive, **characterised in that** the stator (13) is provided with a toroidal coil (20) closed on itself and surrounding the annular core (16), and which constitutes both the main coil (18) supplied by the variable frequency drive and a coil opposing the generation of capacitive currents and by inductive coupling able to damage the said bearings (8), and presenting a low stator leakage reactance and at least equal to 0.5 times the leakage reactance of a conventional motor.

8. Electric motor according to claim 7, **characterised in that** the single toroidal coil (20) is realised as an N-phase coil with inputs spaced at 360°/N.

9. Electric motor according to claim 8, **characterised in that** the coil (20) is realised as a three-phase coil with inputs connected in parallel, which are supplied by three-phase output terminals of the variable drive.
